# FASCICULE DE BREVET EUROPEEN

(11) **EP 1 803 116 B1**
(45) Date de publication et mention de la délivrance du brevet: **28.01.2009**
(21) Numéro de dépôt: 05809473.1
(22) Date de dépôt: 13.10.2005
(51) Int. Cl.: G10L 15/08

(54) **PROCEDE DE RECONNAISSANCE VOCALE COMPRENANT UNE ETAPE D ' INSERTION DE MARQUEURS TEMPORELS ET SYSTEME CORRESPONDANT**
SPRACHERKENNUNGSVERFAHREN MIT TEMPORALER MARKEREINFÜGUNG UND ENTSPRECHENDES SYSTEM
VOICE RECOGNITION METHOD COMPRISING A TEMPORAL MARKER INSERTION STEP AND CORRESPONDING SYSTEM

(30) Priorité: 19.10.2004 FR 0411096
(43) Date de publication de la demande: 04.07.2007
(73) Titulaire: France Télécom, 75015 Paris (FR)
(72) Inventeur: JOUVET, Denis, F-22300 Lamnion (FR); DAMNATI, Géraldine, F-22700 Perros-Guirrec (FR); DELPHIN-POULAT, Lionel, F-25560 Trebeurden (FR)
(74) Mandataire: Loisel, Bertrand
(86) Numéro de dépôt international: PCT/FR2005/002539
(87) Numéro de publication internationale: WO 2006/042943

(56) Documents cités:
- WO-A-97/42626
- US-A1- 2003 187 643

## Description

L'invention porte sur la reconnaissance de la parole dans le signal audio, par exemple un signal énoncé par un locuteur.

L'invention concerne un procédé et un système automatique de reconnaissance vocale basés sur l'utilisation de modèles acoustiques des signaux vocaux, selon lesquels la parole est modélisée sous la forme d'une ou plusieurs successions de modèles d'unités vocales correspondant chacune à un ou plusieurs phonèmes.

Plus particulièrement, l'invention se rapporte à la reconnaissance de la parole, et plus précisément à l'élaboration des modèles de reconnaissance pour rendre plus efficace et plus riche la tâche de décodage, c'est-à-dire la phase de comparaison du signal à reconnaître avec le ou les modèles de reconnaissance pour identifier le mot prononcé.

Une application particulièrement intéressante d'un tel procédé et d'un tel système concerne la reconnaissance automatique de la parole pour la dictée vocale ou la commande vocale dans le cadre de services vocaux interactifs liés à la téléphonie.

Différents types de modélisation des signaux vocaux peuvent être utilisés dans le cadre de la reconnaissance de la parole. On pourra, à cet égard, se référer à l'article de Lawrence R. Rabiner intitulé « A tutorial on Hidden Markov Models and Selected Applications on Speech Recognition », proceedings of the I.E.E.E., vol. 77, n°2, février 1989. Cet article décrit l'utilisation de modèles de Markov cachés pour modéliser des signaux vocaux. Pour d'autres exemples on peut se référer aussi au document US 2003/0187643 (VAN THONG JEAN-MANUEL ET AL), 2 octobre 2003.

Selon une telle modélisation, une unité vocale, par exemple un phonème ou un mot, est représentée sous la forme d'une ou de plusieurs séquences d'états et d'un ensemble de densités de probabilité modélisant les formes spectrales qui résultent d'une analyse acoustique. Les densités de probabilité sont associées aux états ou aux transitions entre états. Cette modélisation est alors utilisée pour reconnaître un segment de parole énoncée par mise en correspondance avec des modèles disponibles associés à des unités connues (par exemple des phonèmes) par le système de reconnaissance vocale. L'ensemble des modèles disponibles est obtenu par apprentissage préalable, à l'aide d'un algorithme prédéterminé.

Autrement dit, grâce à un algorithme d'apprentissage, on détermine à partir d'échantillons identifiés, l'ensemble des paramètres caractérisant les modèles des unités vocales.

Par ailleurs, pour aboutir à de bonnes performances de reconnaissance, la modélisation des phonèmes tient généralement compte des influences contextuelles, par exemple les phonèmes qui précèdent et qui suivent le modèle courant.

La phase de compilation du modèle consiste à fabriquer et à optimiser le modèle de reconnaissance construit à partir des connaissances syntaxiques comprenant les règles d'enchaînement des mots, des connaissances lexicales comprenant la description des mots en termes d'unités plus petites telles que des phonèmes, et des connaissances acoustiques comprenant les modèles acoustiques des unités choisies.

Les enchaînements de mots donnent lieu à un réseau syntaxique. Chaque mot est ensuite remplacé par le réseau lexical correspondant à la description des prononciations possibles de ce mot. Finalement, chaque unité est remplacée par son modèle acoustique,

Par ailleurs à chaque étape de traitement, les réseaux sont optimisés pour éliminer les redondances, et donc réduire la taille globale du modèle. L'optimisation permet de réduire les besoins de l'unité centrale de calcul pour la reconnaissance proprement dite, c'est-à-dire l'étape de décodage.

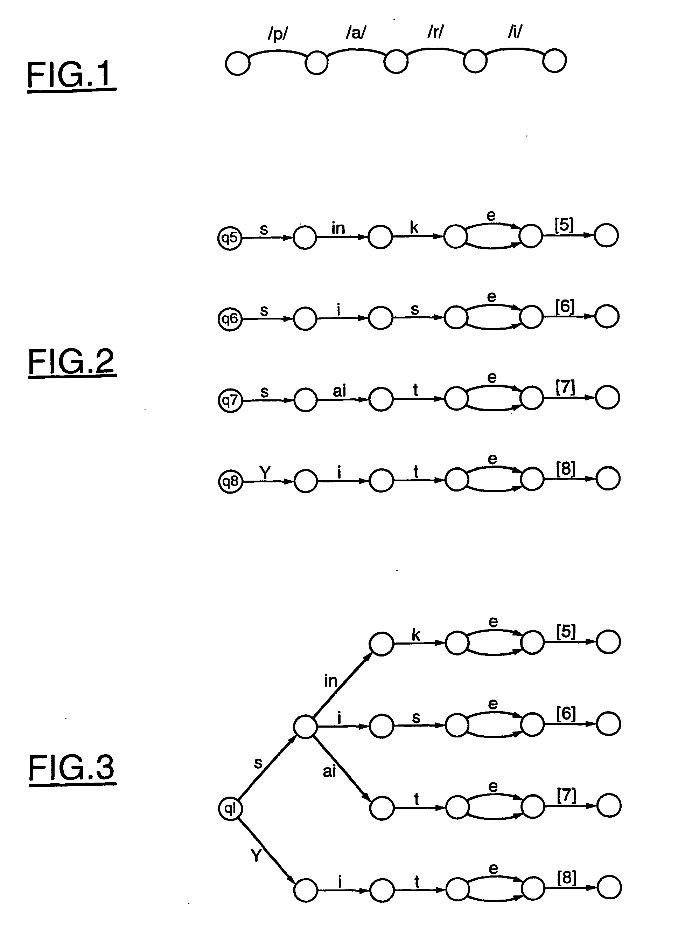

Les figures 1 à 3 décrivent un exemple de structuration de modèles lexicaux utilisés. Comme on peut le voir sur la figure 1, chaque mot du vocabulaire utilisé pour la reconnaissance vocale, se décrit en termes d'unités vocales, ici des phonèmes.

Ainsi, pour le mot « Paris » la prononciation en terme de phonèmes peut s'écrire :
Paris ⇔ p . a . r . i

Des descriptions plus complexes à base d'unités subphonétiques, par exemple tenant compte des séparations tenue et explosion des plosives, ou de polyphones, c'est-à-dire la suite de plusieurs phonèmes, sont possibles. Cependant, comme elles ne modifient pas le principe de l'invention, on utilisera uniquement des unités phonétiques dans la description de l'invention, les transpositions à d'autres unités étant évidentes.

À titre d'exemple, on considèrera un vocabulaire simple, limité aux quatre chiffres « 5 », « 6 », « 7 » et « 8 », dont les descriptions phonétiques sont :
5 ⇒ s. in . k | s . in . k . e ⇔ s . in . k . (e| ())
6 ⇒ s . i . s | s . i . s . e ⇔ s . i . s . (e | ())
7 ⇒ s . ai . t | s . ai . t . e ⇔ s . ai . t . (e | ())
8 ⇒ Y . i . t | Y . i . t . e ⇔ Y . i . t . (e | ())
où « () » désigne l'absence d'unité. Pour ces chiffres, il existe deux prononciations possibles selon que le e-muet « e » est prononcé ou pas. Ces descriptions lexicales peuvent se représenter graphiquement sous la forme des réseaux représentés sur la figure 2. Les références « [5] », « [6] », « [7] » et « [8] » désignent des marqueurs correspondant aux mots prononcés. Ces marqueurs de mots correspondent aux mots prononcés et sont placés à la fin du chiffre énoncé.

On note que l'approche se transpose naturellement dans le cas des transducteurs en utilisant les phonèmes comme symboles d'entrée et les marqueurs comme symboles de sortie. L'inverse fonctionne également selon l'utilisation faite du transducteur.

Il est possible de transformer la représentation de la figure 2, en tenant compte du fait que plusieurs mots commencent par les mêmes phonèmes, en l'occurrence les chiffres « 5 », « 6 » et « 7 ». Les lexiques sont alors représentés sous la forme d'un arbre lexical, comme sur la figure 3. Sur cette figure, le symbole « ql » représente le début formel de l'arbre. Puis, étant donné que le phonème « s » est employé au début des trois chiffres « 5 », « 6 » et « 7 », une transition commune est utilisée pour ce phonème. Cette opération permet d'utiliser les mêmes modèles lorsque des phonèmes sont communs à plusieurs mots du vocabulaire ; la transformation en arbre permet d'utiliser les mêmes modèles pour les suites de phonèmes communes à plusieurs débuts de mots.

Pour les applications de reconnaissance vocale, le système de reconnaissance doit reconnaître, soit des mots isolés, soit des suites de mots. Les modèles lexicaux représentés par exemple sur les figures 2 et 3 doivent être associées à une syntaxe. Le rôle des modèles syntaxiques est de définir la suite possible des mots pour l'application traitée. Plusieurs approches sont possibles. On peut utiliser, soit des grammaires formelles qui définissent explicitement les suites de mots possibles, soit des grammaires statistiques à base de N-grams qui fournissent les probabilités de succession de suites de N mots. Dans le cas des grammaires régulières, des grammaires non récursives, et des N-grams, il est possible de représenter l'ensemble des contraintes correspondantes sous la forme d'un graphe, par exemple une chaîne de Markov ou un transducteur probabilisé.

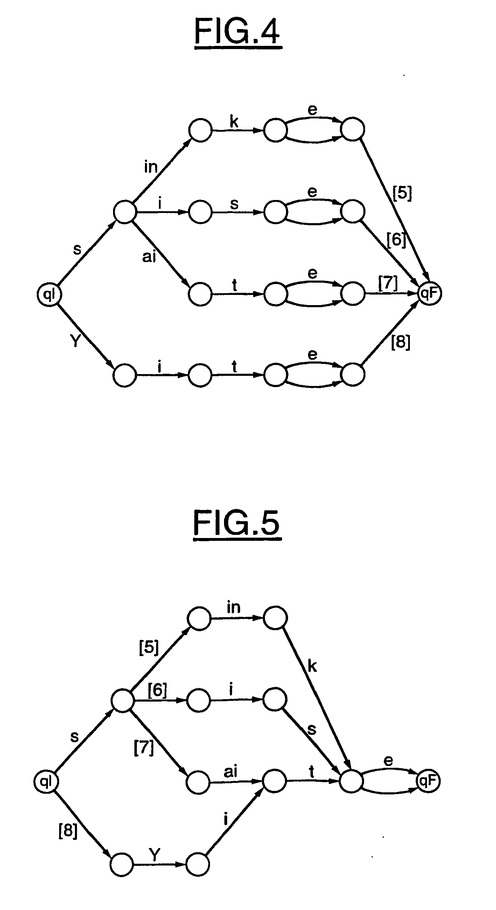

Une fois les différents modèles (acoustiques, lexicaux et syntaxiques) définis, on peut alors les compiler pour obtenir le modèle de reconnaissance vocale proprement dit. Lorsque le vocabulaire d'une application est figé, il est plus efficace de pré-compiler le modèle correspondant, soit au niveau phonétique, soit au niveau acoustique, selon le décodeur employé. La pré-compilation permet d'optimiser le réseau correspondant en supprimant, c'est-à-dire en factorisant les redondances éventuelles. On évite ainsi de dupliquer inutilement les calculs au cours de la phase de décodage. Bien sûr, il est possible de pré-compiler un modèle correspondant à des phrases complètes ou bien seulement à des portions de phrases, telles que des expressions. La première étape de compilation dans le cas du vocabulaire des quatre chiffres cités ci-avant, conduit au réseau représenté sur la figure 4. Sur cette figure, une unique borne finale « qF » est utilisée pour les quatre chiffres du vocabulaire, le « s » commun aux trois premiers chiffres ayant déjà été factorisé lors de l'élaboration des modèles lexicaux.

Le réseau de la figure 4 peut être optimisé, en tenant compte que plusieurs mots se terminent par des suites identiques de phonèmes. Dans cet exemple, le phonème répété est le e-muet. Cette autre phase d'optimisation conduit à l'exemple de réseau représenté sur la figure 5. Sur cette figure, le e-muet est commun à tous les chiffres du vocabulaire. Finalement, tous les marqueurs de mots se retrouvent au milieu des chemins affectés à chaque chiffre du vocabulaire. En effet, le marqueur de mots est placé à un endroit du chemin où l'on peut identifier le chiffre qui a été prononcé par le locuteur.

Toutes les optimisations, telles que la factorisation de phonèmes et le déplacement de marqueurs, sont effectuées automatiquement par un compilateur. La compilation des modèles, qui inclut les phases d'optimisation des réseaux avec le déplacement des marqueurs, se révèle très efficace pour la reconnaissance de parole continue. Le graphe alors obtenu est compact et la factorisation des phonèmes communs en début ou en fin de mots évite la duplication de calculs communs.

En revanche, les déplacements des marqueurs de mots nécessaires pour ces optimisations ont fait perdre l'information de la position de la fin des mots. Ceci est particulièrement pénalisant lorsque l'on a besoin de récupérer des informations temporelles précises, comme par exemple les instants de début et de fin de mots.

Les informations temporelles, comme par exemple les instants de début et de fin de mots reconnus, sont indispensables par exemple pour le calcul des mesures de confiance précises sur les mots reconnus, ainsi que pour la fabrication de graphes de mots et de treillis de mots et certains post-traitements associés. Certaines applications multimodales requièrent également une connaissance précise des instants de prononciation des mots. À défaut d'une telle information, il est impossible de relier et de combiner diverses modalités entre elles, comme par exemple la parole et le pointage d'un stylet ou encore d'un écran tactile. La perte de ces informations lors de la phase de factorisation est donc très pénalisante.

L'utilisation des graphes, tels que décrits précédemment, pose alors le problème suivant : soit on utilise un réseau optimisé au détriment des informations temporelles, soit on a besoin des informations temporelles et on renonce à l'optimisation globale du réseau.

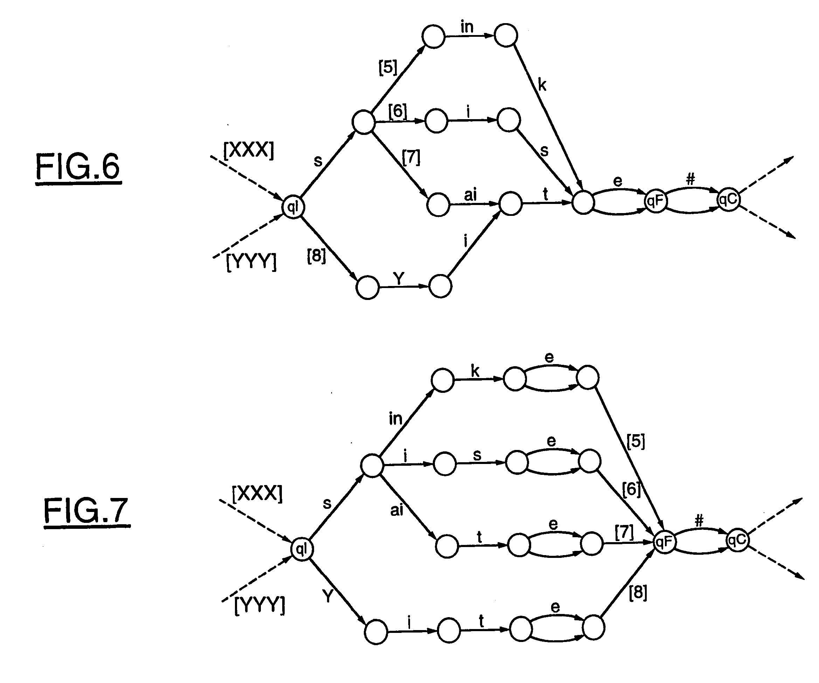

Les extraits de réseaux représentés respectivement sur les figures 6 et 7 représentent ces deux alternatives. Le réseau de la figure 6 représente un arbre optimisé en ayant déplacé les marqueurs de mots impliquant une plus grande efficacité du décodage, mais ne permettant pas de récupérer les informations temporelles précises sur les frontières des mots reconnus.

La référence « # » représente une pause qui peut être faite après l'énonciation d'un mot. Les références [XXX] et [YYY] désignent d'autres réseaux lexicaux associés au réseau principal selon les règles syntaxiques définies.

Le réseau représenté sur la figure 7 conserve la place du marqueur de mot. Il permet donc de conserver les marqueurs de mots à la fin de chaque mot reconnu, et ainsi de connaître les frontières entre chaque mot. Cependant, il est beaucoup plus gros et augmente les besoins de l'unité de reconnaissance.

Le but de l'invention est de pallier aux inconvénients décrits ci-avant et donc de fournir un procédé et un système de reconnaissance de la parole, permettant de regrouper les avantages liés à l'optimisation des réseaux lexicaux et l'obtention des informations temporelles concernant le mot énoncé.

L'invention propose un procédé de reconnaissance vocale selon la revendication 1. Ce procédé comprend une étape de décodage au cours de laquelle on identifie un mot énoncé à partir de modèles de signaux vocaux décrits à l'aide d'unités vocales, chaque modèle de signal vocal représentant un mot appartenant à un vocabulaire prédéfini. Le procédé comprend également une étape d'organisation des modèles de signaux vocaux en un réseau lexical optimisé associé à des règles syntaxiques au cours de laquelle on identifie chaque mot avec un marqueur dit de mot. Selon une caractéristique générale de l'invention, on insère une information temporelle au sein du réseau lexical optimisé sous forme de marqueurs supplémentaires dit génériques, de manière à repérer les instants pertinents lors de l'étape de décodage.

Ce procédé a aussi pour avantage de combiner à la fois un réseau lexical optimisé et la présence d'informations temporelles, grâce à l'utilisation combinée de marqueurs de mot et de marqueurs génériques.

Selon une autre caractéristique de ce procédé, le réseau lexical optimisé comprend au moins un sous-réseau lexical sous forme d'un arbre lexical optimisé, chaque sous-réseau décrivant une partie des mots du vocabulaire prédéfini, chaque branche de l'arbre correspondant à des modèles de signaux vocaux représentant des mots.

En d'autres termes, chaque arbre lexical est assimilé à un sous-réseau lexical. Un arbre lexical correspond à l'ensemble des mots du vocabulaire pouvant être utilisé à un endroit particulier de l'énoncé.

Selon une caractéristique de l'invention, le réseau lexical optimisé comprend une série d'arbres lexicaux optimisés et associés entre eux selon une syntaxe autorisée. Les marqueurs génériques se situent alors entre chaque arbre lexical, de manière à identifier la frontière entre deux mots appartenant à deux arbres lexicaux successifs.

Selon un autre mode de mise en oeuvre, les modèles de signaux vocaux sont organisés sur plusieurs niveaux avec un premier niveau comprenant le réseau lexical optimisé sous forme d'un arbre lexical optimisé et rebouclé à l'aide d'une boucle non contrainte, et un deuxième niveau comprenant l'ensemble des règles syntaxiques. Le marqueur générique se situe à la fin de l'arbre lexical optimisé pour permettre la récupération des informations temporelles de fin de mot.

Les marqueurs génériques comprennent avantageusement une indication de fin ou de début de mots.

Ils peuvent également comprendre avantageusement une indication sur le type d'information concerné entre deux marqueurs génériques.

L'invention a également pour objet, selon la revendication 7, un système de reconnaissance vocale comprenant un décodeur apte à identifier un mot énoncé à partir de modèles de signaux vocaux décrits à l'aide d'unités vocales, chaque modèle de signal vocal représentant un mot appartenant à un vocabulaire prédéfini. Le système comprend également des moyens d'organisation des modèles de signaux vocaux en un réseau lexical optimisé associé à des règles syntaxiques, et dans lequel chaque mot est identifié avec un marqueur dit de mots.

Ce système de reconnaissance vocale comprend en outre des moyens d'insertion d'une information temporelle au sein du réseau lexical optimisé sous forme de marqueurs supplémentaires dits génériques, de manière à repérer les instants pertinents pour le décodeur.

Le système décrit ci-avant peut être avantageusement utilisé pour la reconnaissance automatique de la parole dans des services interactifs liés à la téléphonie.

D'autres buts, caractéristiques et avantages de l'invention apparaîtront à la lecture de la description suivante, donnée uniquement à titre d'exemples non limitatifs, et faite en référence aux dessins annexés, sur lesquels :
- la figure 1, dont il a été fait référence ci-avant, est une représentation schématique de la décomposition d'un mot en phonèmes ;
- les figures 2 à 7 dont il a également été fait mention ci-avant, sont des représentations schématiques de l'organisation en réseau des modèles de signaux lexicaux ;
- la figure 8 est un schéma synoptique illustrant la structure générale d'un système de reconnaissance vocale selon l'invention ;
- la figure 9 est une représentation schématique d'un extrait de réseau lexical mis en oeuvre dans le procédé selon l'invention ;
- la figure 10 est un schéma synoptique illustrant une variante du réseau lexical mise en oeuvre dans le procédé de reconnaissance vocale selon l'invention ; et
- les figures 11 et 12 sont des schémas synoptiques illustrant une autre variante d'un réseau lexical utilisé dans le procédé de reconnaissance vocale selon l'invention.

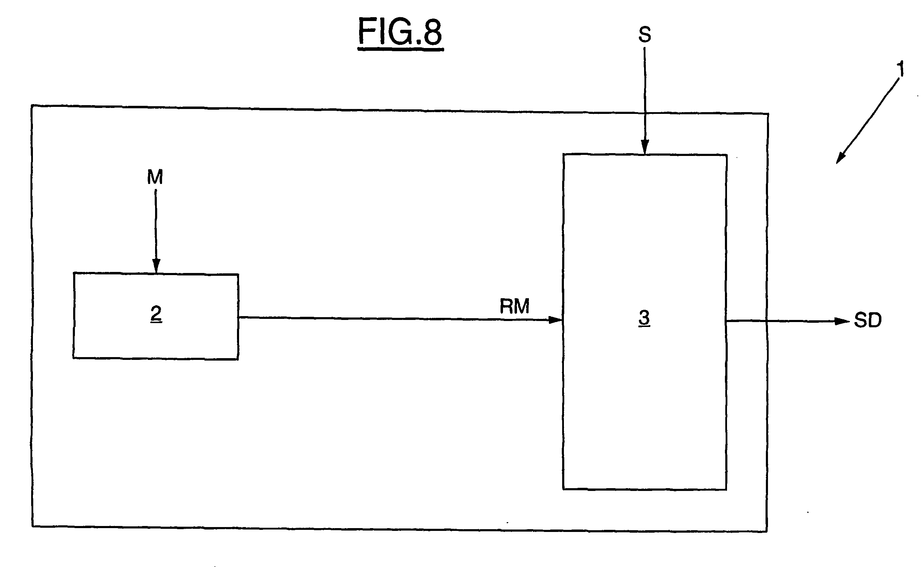

Sur la figure 8, on a représenté de manière très schématique la structure générale d'un système de reconnaissance vocale, conforme à l'invention, désignée par la référence numérique générale 1.

Comme on le voit, ce système comprend des moyens 2 aptes d'une part à organiser en réseaux lexicaux optimisés, les modèles M de signaux vocaux qu'il reçoit en entrée. D'autre part les moyens 2 insèrent une information temporelle au sein des modèles de signaux vocaux. Cette information sera décrite plus en détail ci-après.

Les moyens 2 délivrent en sortie des réseaux lexicaux optimisés RM dans lequel on a inséré une information temporelle.

Le système 1 comprend également un décodeur 3, qui reçoit en entrée le signal vocal à décoder S et le réseau lexical optimisé RM, de manière à opérer la reconnaissance du signal vocal proprement dite.

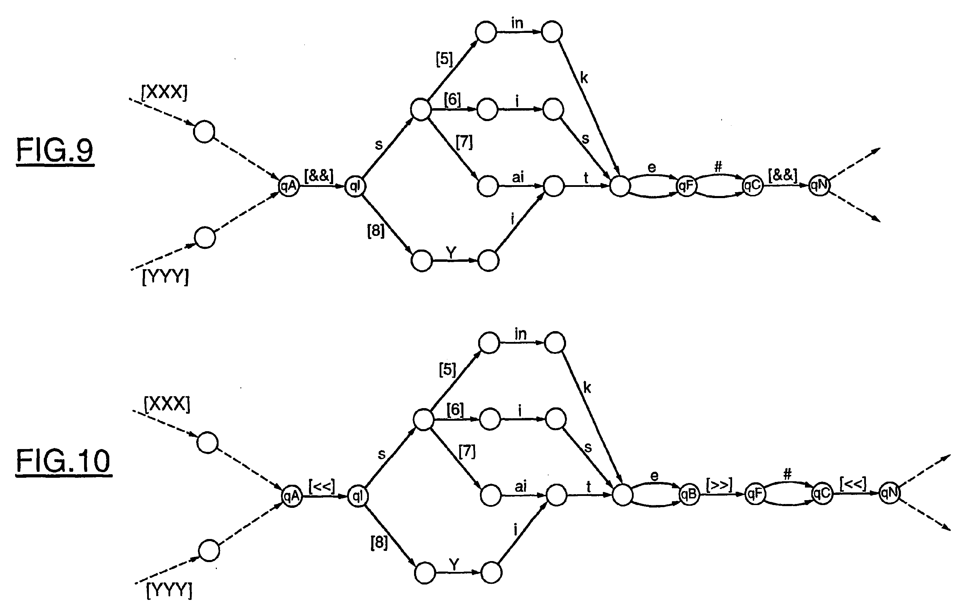

On se réfère à présent à la figure 9, sur laquelle on a représenté un extrait de réseau lexical issu d'une étape d'organisation des modèles de signaux vocaux selon l'invention. De même que pour les figures 6 à 7, le réseau lexical de la figure 9 est intégré dans un réseau plus large comprenant une succession de réseaux lexicaux optimisés.

Le réseau lexical de la figure 9 a été optimisé. Il comporte en outre des informations temporelles grâce à l'ajout de marqueurs génériques distinct des marqueurs de mot selon le procédé de l'invention. Ils sont représentés sur la figure par le signe [&&]. Ces marqueurs génériques ont pour but d'indiquer les frontières des mots
ou des expressions pertinentes à identifier, dans cet exemple le début et la fin du mot.

L'ajout de marqueurs génériques pour définir les frontières des zones pertinentes, permet de bien dissocier le rôle et la fonctionnalité des divers marqueurs : les marqueurs de mots servent à identifier les mots reconnus, et les marqueurs temporels, ici les marqueurs génériques, servent à repérer des instants pertinents lors du décodage.

Dans cette approche, on peut se permettre de déplacer sans contrainte les marqueurs de mots, ce qui permet d'optimiser efficacement les réseaux comme décrit précédemment. En revanche, lors de la phase d'optimisation, on ne déplace pas les marqueurs génériques.

Il est également possible de différencier les marqueurs de début et de fin des zones pertinentes à identifier. Cette variante est illustrée sur la figure 10, où le début d'une zone pertinente est identifiée par le marqueur « [<<] » et la fin par « [>>] ». Cette différenciation est intéressante lorsque l'on désire repérer la position de quelques mots
ou expressions clé seulement.

Les marqueurs temporels, c'est-à-dire les marqueurs génériques, peuvent être utilement mis à profit pour indiquer le début et/ou la fin de concepts jugés intéressants pour une application, comme par exemple l'occurrence d'un numéro de téléphone, d'un nom de ville, d'une adresse, ...

Il est également possible de préciser le type d'information concerné dans les marqueurs temporels pour faciliter les traitements applicatifs ultérieurs. Par exemple, on peut utiliser dans le cas des numéros de téléphone, des marqueurs « [NUMTEL<<] » au lieu de « [<<] », et, éventuellement, « [NUMTEL>>) » au lieu de « [>>] ».

La suite des marqueurs retournée par le décodeur contiendra par exemple : « [NUMTEL<<] » [02] [96] [05] [11] [11] « [NUMTEL>>] ». Cette approche permet de garantir que la séquence obtenue entre les marqueurs résulte de la syntaxe locale des numéros de téléphone, et donc d'identifier sans ambiguïté le numéro de téléphone dans la suite des marqueurs retournés. Les instants associés aux marqueurs « [NUMTEL<<] » et « [NUMTEL>>] » fournissent alors les informations temporelles de début et de fin de la partie de l'énoncé correspondant au numéro de téléphone, information utile pour, par exemple, calculer une mesure de confiance sur cette zone, c'est-à-dire donner une indication sur la fiabilité des mots reconnus correspondant à cette zone

L'approche s'applique également au cas des modèles N-grams représentés sous forme de réseau compilé, que ce soit des N-grams de mots ou de classes de mots ou mixtes.

L'approche s'applique également au cas de mélange de N-grams et de grammaires régulières.

Par ailleurs, plusieurs marqueurs temporels peuvent être imbriqués les uns dans les autres afin de repérer plus facilement un concept et en même temps des éléments de celui-ci.

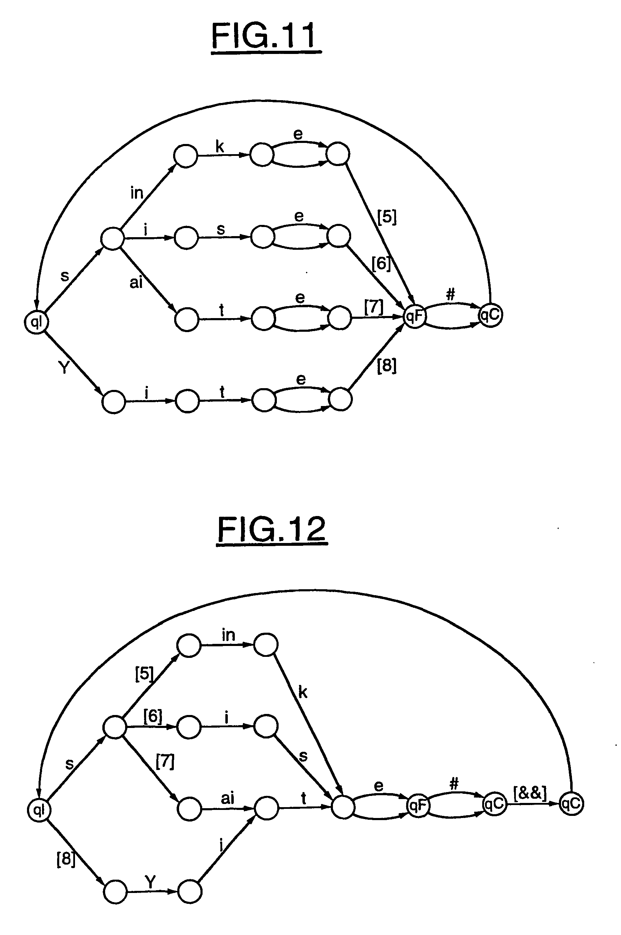

On se réfère à présent à la figure 11, qui illustre une organisation en réseaux lexicaux différente de celle présentée ci-avant. Cette autre approche est dite de « décodage multi-niveaux ». Au lieu de compiler l'ensemble des connaissances syntaxiques, lexicales et acoustiques, en un unique réseau, on garde chacune d'entre elles complètement séparée ou partiellement séparée.

Par exemple, dans le cas de la reconnaissance de parole continue, une approche possible consiste à utiliser un modèle compilé correspondant à une boucle non contrainte de l'ensemble des mots de vocabulaire, et à avoir une deuxième source de connaissance qui représente le niveau syntaxique. Le graphe de la figure 11 donne une indication de la structure d'un tel réseau servant de support au modèle lexical, dans le cas d'école où le vocabulaire est limité aux quatre chiffres « 5 », « 6 », « 7 » et « 8 », avant le remplacement des unités phonétiques par leur modèle acoustique correspondant. En pratique, les vocabulaires habituellement traités sont généralement de plusieurs milliers de mots.

Le décodeur exploite alors simultanément les deux sources d'informations : le réseau compilé du vocabulaire et les informations syntaxiques. Pour cela, il effectue la recherche du chemin optimal dans un graphe dit produit, fabriqué dynamiquement et partiellement au cours du décodage. En effet, seule la partie du réseau correspondant à la zone explorée est construite.

Comme le niveau supérieur correspond à la syntaxe, il intervient à chaque fois que le décodeur traite une transition comprenant le marqueur de mot au niveau inférieur, c'est-à-dire le modèle compilé du lexique. Ce passage par les marqueurs de mots entraîne la prise en compte du modèle de langage pour décider ou non du prolongement des chemins correspondants, soit en les interdisant complètement si la syntaxe ne les autorise pas, soit en les pénalisant plus ou moins en fonction de la probabilité du modèle de langage. Sur le graphe de la figure 11, on voit clairement que l'accès à cette information provenant du modèle de langage ne se fait, dans cet exemple, qu'à la fin des mots, donc après avoir effectué la coûteuse comparaison acoustique sur l'ensemble du mot.

En revanche, si on déplace les marqueurs des mots comme illustré sur la figure 12, on bénéficie de l'information syntaxique beaucoup plus tôt, ce qui permet de stopper plus rapidement l'exploration des chemins non pertinents, compte tenu de la syntaxe considérée.

Cependant, comme dans les exemples précédemment cités, le déplacement des marqueurs de mots ne permet plus de repérer les instants de fin de mots lors du décodage. Par contre, en introduisant les marqueurs génériques tels que précédemment décrits dans l'invention, on permet au décodeur de repérer l'information temporelle précisant les instants de fin de mot.

Dans un autre mode de mise en oeuvre, il est possible d'utiliser d'autres types de marqueurs, notamment pour identifier les transitions associées au modèles de langage. En effet, dans des modèles compilés, il existe des transitions de nature différente : certaines servent uniquement pour l'acoustique, c'est-à-dire qu'elles font partie du modèle acoustique correspondant à une unité phonétique, d'autres servent à indiquer l'identité de mots, ce sont les marqueurs de mots, d'autres servent juste de support à des marqueurs génériques pour le repérage d'informations temporelles, et d'autres, encore servent à porter des probabilités de modèle de langage, c'est-à-dire qu'ils jouent un rôle équivalent aux probabilités des transitions du réseau syntaxique.

Lorsque cela s'avère nécessaire, il est possible d'utiliser un marqueur particulier pour identifier les transitions porteuses d'une probabilité de modèle de langage. Cela permet de repérer les informations, c'est-à-dire les probabilités, associées lors du décodage et donc de pouvoir séparer les contributions du modèle de langage de celles provenant de l'acoustique dans le calcul des scores de décodage. Cette séparation des contributions est nécessaire par exemple pour le calcul des mesures de confiance acoustiques sur les mots reconnus.

## Revendications

1. Procédé de reconnaissance vocale comprenant une étape de décodage au cours de laquelle on identifie un mot énoncé à partir de modèles de signaux vocaux décrits à l'aide d'unités vocales, chaque modèle de signal vocal représentant un mot appartenant à un vocabulaire prédéfini, et comprenant également une étape d'organisation des modèles de signaux vocaux en un réseau lexical optimisé pour éliminer les redondances, et donc réduire la taille globale du modèle, le réseau lexical optimisé étant associé à des règles syntaxiques au cours de laquelle on identifie chaque mot avec un marqueur dit de mot, **caractérisé par le fait que** l'on insère une information temporelle au sein du réseau lexical optimisé sous forme de marqueurs supplémentaires dits génériques, de manière à repérer les instants pertinents lors de l'étape de décodage.

2. Procédé selon la revendication 1, **caractérisé par le fait que** le réseau lexical optimisé comprend au moins un sous-réseau lexical sous forme d'un arbre lexical optimisé, chaque sous-réseau décrivant une partie des mots du vocabulaire prédéfini, chaque branche de l'arbre correspondant à des modèles de signaux vocaux représentant des mots.

3. Procédé selon l'une quelconque des revendications précédentes, **caractérisé par le fait que** le réseau lexical optimisé comprend une série d'arbres lexicaux optimisés et associés entre eux selon une syntaxe autorisée, et **par le fait que** le marqueur générique se situe entre chaque arbre lexical, de manière à identifier la frontière entre deux mots appartenant à deux arbres lexicaux successifs.

4. Procédé selon la revendication 2, **caractérisé par le fait que** les modèles de signaux vocaux sont organisés sur plusieurs niveaux avec un premier niveau comprenant le réseau lexical optimisé sous forme d'un arbre lexical optimisé et rebouclé à l'aide d'une boucle non contrainte, et un deuxième niveau comprenant l'ensemble des règles syntaxiques, et **par le fait que** le marqueur générique se situe à la fin de l'arbre lexical optimisé pour permettre l'activation du niveau syntaxique.

5. Procédé selon l'une quelconque des revendications précédentes, **caractérisé par le fait que** les marqueurs génériques comprennent une indication de fin ou de début de mot.

6. Procédé selon l'une quelconque des revendications précédentes, **caractérisé par le fait que** les marqueurs comprennent une indication sur le type d'information concerné entre deux marqueurs génériques.

7. Système (1) de reconnaissance vocale comprenant un décodeur (3) apte à identifier un mot énoncé à partir de modèles de signaux vocaux décrits à l'aide d'unités vocales, chaque modèle de signal vocal représentant un mot appartenant à un vocabulaire prédéfini, et comprenant également des moyens d'organisation (2) des modèles de signaux vocaux en un réseau lexical optimisé pour éliminer les redondances, et donc réduire la taille globale du modèle, le réseau lexical optimisé étant associé à des règles syntaxiques, et dans lequel chaque mot est identifié avec un marqueur dit de mot, **caractérisé par le fait que** le système de reconnaissance vocale comprend des moyens d'insertion (2) d'une information temporelle au sein du réseau lexical optimisé sous forme de marqueurs supplémentaires dits génériques, de manière à repérer les instants pertinents pour le décodeur (3).

8. Utilisation d'un système selon la revendication 7 pour la reconnaissance automatique de la parole dans des services interactifs liés à la téléphonie.

## Claims

1. Voice recognition method comprising a decoding stage during which an enunciated word is identified on the basis of voice signal models described with the aid of voice units, each voice signal model representing a word belonging to a predefined vocabulary, and also comprising a step of organizing voice signal models into an optimized lexical network so as to eliminate the redundancies, and hence reduce the overall size of the model, the optimized lexical network being associated with syntactic rules during which each word is identified with a word marker, **characterized in that** temporal information is inserted within the optimized lexical network in the form of additional generic markers, so as to spot relevant moments during the decoding step.

2. Method according to Claim 1, **characterized in that** the optimized lexical network comprises at least one lexical subnetwork in the form of an optimized lexical tree, each subnetwork describing a part of the predefined vocabulary words, each branch of the tree corresponding to voice signal models representing words.

3. Method according to either of the preceding claims, **characterized in that** the optimized lexical network comprises a series of optimized lexical trees associated together according to an authorized syntax, and **in that** the generic marker is located between each lexical tree, in such a way as to identify the boundary between two words belonging to two successive lexical trees.

4. Method according to Claim 2, **characterized in that** the voice signal models are organized on several levels with a first level including the optimized lexical network in the form of an optimized lexical tree looped back with the aid of an unconstrained loop, and a second level including all the syntactic rules, and **in that** the generic marker is located at the end of the optimized lexical tree for enabling the activation of the syntactic level.

5. Method according to any one of the preceding claims, **characterized in that** the generic markers include an indication of word end or beginning.

6. Method according to any one of the preceding claims, **characterized in that** the markers include an indication of the type of information concerned between two generic markers.

7. Voice recognition system (1) comprising a decoder (3) suitable for identifying an enunciated word on the basis of voice signal models described with the aid of voice units, each voice signal model representing a word belonging to a predefined vocabulary, and also comprising means of organizing (2) voice signal models into an optimized lexical network so as to eliminate the redundancies, and hence reduce the overall size of the model, the optimized lexical network being associated with syntactic rules, and in which each word is identified with a word marker, **characterized in that** the voice recognition system comprises means of inserting (2) temporal information within the optimized lexical network in the form of additional generic markers, so as to spot relevant moments for the decoder (3).

8. Use of a system according to Claim 7 for automatic speech recognition in interactive services associated with telephony.

## Patentansprüche

1. Spracherkennungsverfahren, das einen Decodierschritt aufweist, während dem ein gesprochenes Wort ausgehend von mit Hilfe von Spracheinheiten beschriebenen Sprachsignalmodellen identifiziert wird, wobei jedes Sprachsignalmodell ein Wort darstellt, das zu einem vordefinierten Vokabular gehört, und das ebenfalls einen Schritt der Organisation der Sprachsignalmodelle in einem zur Beseitigung der Redundanzen und somit zur Reduzierung der globalen Größe des Modells optimierten lexikalischen Netz aufweist, wobei das optimierte lexikalische Netz Syntaxregeln zugeordnet ist, während dem jedes Wort mit einem so genannten Wort-Marker identifiziert wird, **dadurch gekennzeichnet, dass** eine Zeitinformation in Form von zusätzlichen, so genannten generischen Markern in das optimierte lexikalische Netz eingefügt wird, um im Decodierschritt die relevanten Zeitpunkte zu kennzeichnen.

2. Verfahren nach Anspruch 1, **dadurch gekennzeichnet, dass** das optimierte lexikalische Netz mindestens ein lexikalisches Subnetz in Form eines optimierten lexikalischen Baums aufweist, wobei jedes Subnetz einen Teil der Wörter des vordefinierten Vokabulars beschreibt, wobei jeder Zweig des Baums Wörter darstellenden Sprachsignalmodellen entspricht.

3. Verfahren nach einem der vorhergehenden Ansprüche, **dadurch gekennzeichnet, dass** das optimierte lexikalische Netz eine Reihe von optimierten und einander gemäß einer erlaubten Syntax zugeordneten lexikalischen Bäumen aufweist, und **dadurch**, dass der generische Marker sich zwischen jedem lexikalischen Baum befindet, um die Grenze zwischen zwei Wörtern zu identifizieren, die zu zwei aufeinanderfolgenden lexikalischen Bäumen gehören.

4. Verfahren nach Anspruch 2, **dadurch gekennzeichnet, dass** die Sprachsignalmodelle über mehrere Ebenen organisiert sind, mit einer ersten Ebene, die das optimierte lexikalische Netz in Form eines optimierten und mit Hilfe einer nicht eingeschränkten Schleife rückgekoppelten lexikalischen Baums enthält, und mit einer zweiten Ebene, die die Gesamtheit der Syntaxregeln enthält, und **dadurch**, dass der generische Marker sich am Ende des optimierten lexikalischen Baums befindet, um die Aktivierung der Syntaxebene zu ermöglichen.

5. Verfahren nach einem der vorhergehenden Ansprüche, **dadurch gekennzeichnet, dass** die generischen Marker eine Wortende- oder Wortanfang-Anzeige aufweisen.

6. Verfahren nach einem der vorhergehenden Ansprüche, **dadurch gekennzeichnet, dass** die Marker eine Anzeige des betroffenen Informationstyps zwischen zwei generischen Markern aufweisen.

7. Spracherkennungssystem (1), das einen Decoder (3) aufweist, der ein gesprochenes Wort ausgehend von mit Hilfe von Spracheinheiten beschriebenen Sprachsignalmodellen identifizieren kann, wobei jedes Sprachsignalmodell ein Wort darstellt, das zu einem vordefinierten Vokabular gehört, und ebenfalls Mittel (2) zur Organisation der Sprachsignalmodelle in einem zur Beseitigung der Redundanzen und somit zur Reduzierung der globalen Größe des Modells optimierten lexikalischen Netz aufweist, wobei das optimierte lexikalische Netz Syntaxregeln zugeordnet ist, und bei dem jedes Wort mit einem so genannten Wort-Marker identifiziert wird, **dadurch gekennzeichnet, dass** das Spracherkennungssystem Mittel (2) zur Einfügung einer Zeitinformation in das optimierte lexikalische Netz in Form von zusätzlichen, so genannten generischen Markern aufweist, um die relevanten Zeitpunkte für den Decoder (3) zu kennzeichnen.

8. Verwendung eines Systems nach Anspruch 7 für die automatische Spracherkennung in interaktiven Diensten, die mit der Telefonie verbunden sind.
